# EUROPEAN PATENT APPLICATION

(11) **EP 2 169 910 A1**
(43) Date of publication of application: **31.03.2010**
(21) Application number: 09164853.5
(22) Date of filing: 08.07.2009
(51) Int. Cl.: H04L 29/08, H04L 29/06

(54) **Information processor, information processing system, method and program**

(30) Priority: 30.09.2008 JP 2008254391
(71) Applicant: Fujitsu Limited, Kawasaki-shi, Kanagawa 211-8588 (JP)
(72) Inventor: Sakakihara, Hironori, Kawasaki-shi, Kanagawa 211-8588 (JP); Hasegawa, Eiji, Kawasaki-shi, Kanagawa 211-8588 (JP); Honda, Fumio, Kawasaki-shi, Kanagawa 211-8588 (JP)
(74) Representative: Stebbing, Timothy Charles

(57) **Abstract**

A technique for maintaining availability of content for distribution in a P2P system. An information processor (2) is connectable to a communication system (1) containing a plurality of terminal devices (3a, 3b, 3c). The information processor (2) receives content holding terminal information for identifying a terminal device holding a specific item of content, calculates a content holding terminal number corresponding to the number of terminal devices holding the content on the basis of the received content holding terminal information, holds a determination reference serving as a reference for determining whether the content holding terminal number is below a predetermined threshold value, determines on the basis of the content holding terminal number calculated by the terminal number calculator and the determination reference whether the content holding terminal number concerned is below the predetermined threshold value, and transmits an extinction preventing instruction for making the terminal device holding the content concerned execute processing for preventing extinction of the content when determining that the content holding terminal number is below the predetermined threshold value.

## Description

This application claims the benefit of priority from Japanese Patent Application No. 2008-254391 filed on September 30, 2008.

Various embodiments of the present invention relate to an information processor and method used in a communication system containing plural terminal devices.

One style of computer networks can be generalized as a client server model in which roles are shared between a server taking charge of specific roles centrally and clients operated by users, and these server and clients are mutually connected to a network.

In this model, processing is executed in such a manner that a client transmits "request" to the server, and the server returns "answer" to the client.

However, a P2P (Peer-to-Peer) model as an architecture requiring no server has recently become popular in place of the client server model having a server bottleneck problem, along with the popularization of always-on connection type broadband lines, the enhancement of the processing power of personal computers and increases in hard disk capacity (see JP-A-2007-65714).

In this model, terminal devices participating in a network evenly undertake the same or similar roles, thereby preventing concentration of a specific resource on a specific terminal device.

One aspect of the present invention provides an information processor that is connectable to a communication system containing a plurality of terminal devices. The information processor includes a terminal information receiver that receives content holding terminal information for identifying a terminal device having a specific item of content (e.g., a particular file) out of the plural terminal devices, a terminal number calculator that calculates a content holding terminal number corresponding to the number of terminal devices holding the content on the basis of the received content holding terminal information, a determination reference holding unit that holds a determination reference serving as a reference for determining whether the content holding terminal number is below a predetermined threshold value, a scarcity determining unit that determines on the basis of the content holding terminal number calculated by the terminal number calculator and the determination reference held by the determination reference holding unit whether the content holding terminal number concerned is below the predetermined threshold value, and an instruction transmitter that transmits an extinction preventing instruction for making the terminal device holding the content concerned execute processing of preventing extinction of the content concerned (in other words, requesting the terminal not to delete the content) when it is determined by the scarcity determining unit that the content holding terminal number is below the predetermined threshold value.

Reference is made, by way of example only, to the accompanying drawings in which:
Fig. 1 schematically illustrates the construction of a P2P system according to a first embodiment of the present invention;

Fig. 2 illustrates an example of content holding terminal information received by a terminal information receiver;

Fig. 3 illustrates an example of the operation of the P2P system when a terminal device transmits content holding terminal information to a managing device;

Fig. 4 illustrates an example of the operation of the P2P system when the managing device transmits inquiry information to the terminal device;

Fig. 5 illustrates an example of the operation of the P2P system when the managing device determines whether the number of terminal devices holding a given item of content is very small or not;

Fig. 6 schematically illustrates the construction of the P2P system according to a second embodiment of the present invention;

Fig. 7 illustrates an example of the operation of the P2P system when a terminal device transmits deletion information to the managing device;

Fig. 8 schematically illustrates the construction of the P2P system according to a third embodiment of the present invention;

Fig. 9 illustrates an example of a determination reference recorded in a determination reference holding unit;

Fig. 10 illustrates an example of transmission terminal number information recorded in a transmission terminal number recording unit;

Fig. 11 illustrates an example of the operation of the P2P system when a scarcity degree of the content holding terminal number is determined; and

Fig. 12 schematically illustrates the construction of the P2P system according to a fourth embodiment of the present invention.

When a terminal device participating in a network aims to obtain some content in a P2P system (communication system) realizing the conventional P2P model, this terminal device obtains the content from one or more of the other terminal devices participating in the network.

That is, in order to distribute content on the P2P system, it is necessary that at least one terminal device holding the content exists on the P2P system.

However, when the number of terminal devices holding a content is very small, the content would be completely extinguished on (no longer available anywhere in) the P2P system once content is deleted from the terminal devices.

In this case, there is a possibility that terminals may be never again be able to obtain the content on the P2P system. That is, it is impossible to maintain the distribution (availability)of the content on the P2P system.

The information processor according to an embodiment disclosed below can maintain the distribution of content in the communication system.

The information processor according to an embodiment includes an inquiring unit for transmitting inquiry information for inquiring whether the content is held or not, to a terminal device corresponding to content holding terminal information received by a terminal information receiver, and receiving answer information obtained as a response to the inquiry concerned from the terminal device concerned, and a terminal information updating unit for updating the content holding terminal information received by the terminal information receiver so that the content holding terminal information corresponding to the terminal device transmitting the answer information is deleted when the answer information received by the inquiring unit indicates that the content is not held.
According to this embodiment, the content holding terminal information received by the terminal information receiver can be updated to the latest state.

The information processor according to an embodiment includes a deletion information receiver for receiving deletion information representing deletion of the content from a terminal device corresponding to content holding terminal information received by the terminal information receiver; and a terminal information updating unit for updating the content holding terminal information received by the terminal information receiver so as to delete the content holding terminal information corresponding to the terminal device which transmits the deletion information concerned.

According to this embodiment, the content holding terminal information received by the terminal information receiver can be updated to the latest state.

Furthermore, traffic in the communication system can be more greatly suppressed as compared with the embodiment in which it is inquired from the information processor to the terminal device whether the content is held or not.

In the embodiment of the present invention, it is possible that the determination reference holding unit holds plural determination references provided at plural stages, the scarcity determining unit determines a scarcity degree indicating how small the number of terminal devices which hold the content is, on the basis of the number of terminal devices holding the content which is calculated by the terminal number calculator, and the plural determination references held in the determination reference holding unit, and the instruction transmitter transmits an extinction preventing instruction (request to prevent deletion of the content) to terminal devices corresponding to the scarcity degree determined by the scarcity determining unit out of the terminal devices holding the content.

According to this embodiment, the instruction transmitter can transmit the extinction preventing instruction to the terminal device corresponding to the scarcity degree out of the terminal devices that hold the content.

In the embodiment of the present invention, it is acceptable to further include a determination reference obtaining unit for obtaining a determination reference from the outside of the information processor, and transmitting the obtained determination reference to the determination reference holding unit.

According to this embodiment, the determination information obtaining unit can hold the determination reference obtained from the outside of the information processor into the determination reference holding unit.

More specific embodiments of the present invention will be described in more detail with reference to the accompanying drawings.

[Embodiment 1]

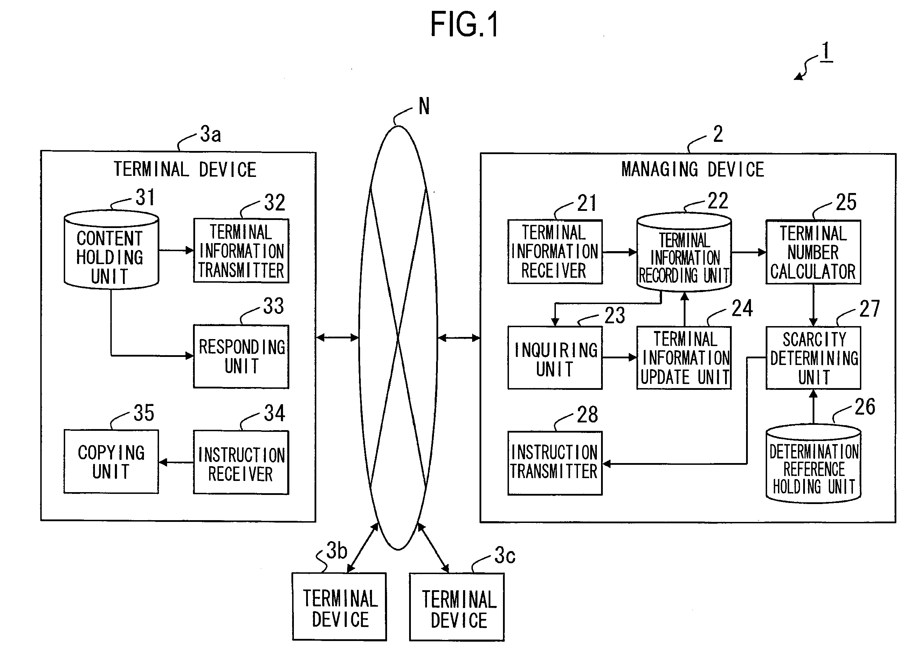

Fig. 1 is a block diagram illustrating the schematic construction of a P2P (Peer-to-Peer) system 1 according to an embodiment.

That is, the P2P system 1 according to this embodiment is equipped with a managing device (information processor) 2 and terminal devices 3a to 3c.

In this embodiment, the managing device 2 and the terminal devices 3a to 3c are general-purpose computers. However, they are not limited to these computers, and may be portable terminals (PDA: Personal Digital Assistant), cellular phones, household electrical appliances (for example, television set, printers, digital cameras, air conditioners, refrigerators), etc.

Here, the managing device 2 and the terminal devices 3a to 3c are connected to a network N.

The network N is the Internet, for example, and the managing device 2 and the terminal devices 3a to 3c can mutually communicate with one another according to a given protocol such as TCP/IP (Transmission Control Protocol/Internet Protocol), UDP/IP (User Datagram Protocol/Internet Protocol) or the like.

The network N may be Ethernet (registered trademark), a home network, wireless LAN or the like in place of the Internet.

In order to simplify the description, one managing device 2 and three terminal devices 3a to 3c are illustrated in Fig. 1. However, the number of the managing devices 2 and the terminal devices 3a to 3c constituting the P2P system 1 are arbitrary.

Furthermore, various kinds of servers (Web server, mail server, homepage server, proxy server, DNS server, DHCP server, etc.) may exist on the P2P system 1.

In the following description concerning the terminal devices 3a to 3c, when they are required to be particularly discriminated from one another, they will be described while alphabetic small letters are affixed to them like the terminal device 3a, for example, and when they are not required to be particularly discriminated from one another or they are generically named, they will be described without affixing any alphabetical small letters like the terminal device 3, for example.

The managing device 2 is equipped with a terminal information receiver 21, a terminal information recording unit 22, an inquiring unit 23, a terminal information updating unit 24, a terminal number calculator 25, a determination reference holding unit 26, a scarcity determining unit 27 and an instruction transmitter 28.

Here, the respective functions of the terminal information receiver 21, the inquiring unit 23, the terminal information updating unit 24, the terminal number calculator 25 , the scarcity determining unit 27 and the instruction transmitter 28 are implemented by executing given programs through an operation unit such as CPU or the like that is provided in a computer.

Accordingly, the programs for implementing the respective functions in a computer or a recording medium in which the programs are recorded is an embodiment of the present invention.

The terminal information recording unit 22 and the determining reference holding unit 26 are implemented by a built-in storage device of the computer and a storage device that is accessible from a computer.

The terminal information receiver 21 receives content holding terminal information transmitted from the terminal device 3 through the network N.

Here, the content holding terminal information contains a content ID for identifying content and a terminal ID for identifying a terminal device holding the content concerned (that is, the terminal device transmitting the content holding terminal information).

Furthermore, content means a document, a still picture, a moving picture, audio data such as music, a computer program, any partial data thereof, or a combination thereof.

The processing of transmitting the content holding terminal information to the managing device 2 by the terminal device 3 will be described later.

The terminal information receiver 21 records the received content holding terminal information into the terminal information recording unit 22.

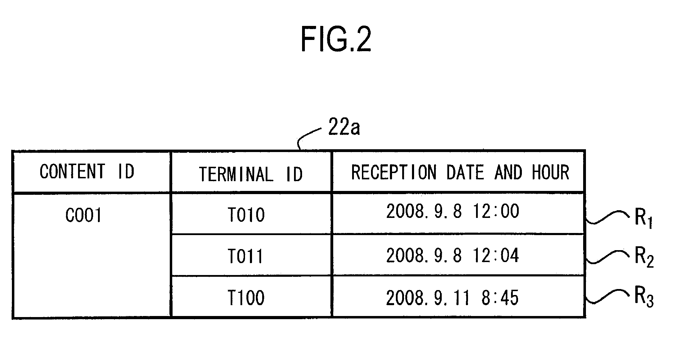

Fig. 2 is a diagram illustrating an example of the content holding terminal information recorded in the terminal information recording unit 22 according to the embodiment.

That is, the terminal information recording unit 2 2 according to the embodiment records the content holding terminal information as a table 22a.

As illustrated in Fig. 2, the content ID, the terminal ID and the reception date and hour are recorded in the table 22a.

That is, three content holding terminal information pieces are recorded in three records R1 to R3 of the table 22a.

That is, the table 22a indicates that the terminal devices holding the content of the content ID "C001" on the P2P system 1 are three terminal devices of a terminal device having the terminal ID "T010", a terminal device having the terminal ID "T011" and a terminal device having the terminal ID "T100".

As described above, the content holding terminal information of the content ID "C001" is recorded as the table 22a in the terminal information recording unit 22 according to this embodiment.

That is, the managing device 2 according to this embodiment is a device for managing the terminal IDs of the terminal devices holding the content of the content ID "C001".

Therefore, a terminal device that wishes to obtain the content of the content ID "C001" can obtain the terminal ID of a terminal device having the content of the content ID "C001" by inquiring to the managing device 2 according to this embodiment.

On the basis of the terminal ID of the terminal device obtained from the managing device 2, the terminal device that wishes to obtain the content concerned transmits a content distribution request to the terminal device concerned.

The terminal device receiving the content distributing request distributes the particular item of content concerned to the terminal device that wishes to obtain the content. Accordingly, the terminal device that wishes to obtain the content can obtain the content concerned.

Inquiry information for inquiring about whether the content is held or not is transmitted from the inquiring unit 23 to the terminal device corresponding to the terminal ID contained in the content holding terminal information recorded in the terminal information recording unit 22.

The inquiring unit 23 may transmit inquiry information to the terminal devices corresponding to terminal IDs contained in all the content holding terminal information pieces recorded in the terminal information recording unit 22, or may transmit inquiry information to the terminal devices corresponding to terminal IDs contained in some content holding terminal information pieces that are recorded in the terminal information recording unit 22 and randomly selected.

Furthermore, the inquiring unit 23 receives answer information obtained as an answer to the inquiry from the terminal device that transmits the inquiry information.

The inquiring unit 23 outputs the received answer information to the terminal information updating unit 24.

The terminal information updating unit 24 updates the content holding terminal information recorded in the terminal information recording unit 22 on the basis of the answer information received by the inquiring unit 23.

Specifically, when the answer information received by the inquiring unit 23 indicates that the content is not held, the terminal information updating unit 24 updates the content holding terminal information recorded in the terminal information recording unit 22 so as to delete the content holding terminal information corresponding to the terminal device transmitting the answer information.

Furthermore, when the answer information received by the inquiring unit 23 indicates that the content is held, the terminal information updating unit 24 updates the content holding terminal information recorded in the terminal information recording unit 22 so that the reception date and hour contained in the content holding terminal information corresponding to the terminal device transmitting the answer information is set to the latest reception date and hour.

The terminal number calculator 25 calculates a content holding terminal number representing the number of terminal devices holding the content on the basis of the content holding terminal information recorded in the terminal information recording unit 22.

Specifically, the terminal number calculator 25 calculates the number of records of the table 22a to calculate the content holding terminal number.

The terminal number calculator 25 outputs the calculated content holding terminal number to the scarcity determining unit 27.

The determining reference holding unit 26 records a determination reference serving as a reference for determining whether the content holding terminal number is very small or not.

In this embodiment, "5" is recorded as the determination reference in the determination reference holding unit 26.

The scarcity determining unit 27 determines on the basis of the content holding terminal number calculated in the terminal number calculator 25 and the determination reference recorded in the determination reference holding unit 26 whether the content holding terminal number is very small or not.

In this embodiment, when the content holding terminal number calculated by the terminal number calculator 25 is less than the determination reference "5", the scarcity determining unit 27 determines that the content holding terminal number is very small.

On the other hand, when the content holding terminal number calculated by the terminal number calculator 25 is not less than the determination reference "5", the scarcity determining unit 27 determines that the content holding terminal number is not very small.

The instruction transmitter 28 executes the following processing when it is determined by the scarcity determining unit 27 that the content holding terminal number is very small.

That is, the instruction transmitter 28 transmits an extinction preventing instruction to the terminal devices corresponding to the terminal IDs contained in the content holding terminal information recorded in the terminal information recording unit 22.

Here, the extinction preventing instruction is an instruction for executing processing for preventing the extinction of the content.

In this embodiment, the processing for preventing the extinction of the content is assumed to be the processing of copying the content.

The instruction transmitter 28 may transmit the extinction preventing instruction to the terminal devices corresponding to the terminal IDs contained in all the content holding terminal information pieces recorded in the terminal information recording unit 22, or transmit the extinction preventing instruction to the terminal devices corresponding to the terminal IDs contained in some content holding terminal information pieces that are recorded in the terminal information recording unit 22 and are randomly selected.

The terminal device 3a is equipped with a content holding unit 31, a terminal information transmitter 32, a responding unit 33, an instruction receiver 34 and a copying unit 35. The constructions of the terminal devices 3b and 3c are the same as that of the terminal device 3a.

Here, the respective functions of the terminal information transmitter 32, the responding unit 33, the instruction receiver 34 and the copying unit 35 are implemented by executing given programs through an operation unit such as CPU or the like that is equipped in a computer.

Accordingly, the programs for implementing the above functions in a computer or a recording medium in which the programs are recorded is an embodiment of the present invention.

Furthermore, the content holding unit 31 is implemented by a built-in storage device of a computer or a storage device that is accessible from a computer.

The content holding unit 31 may hold contents in advance.

When content is newly held in the content holding unit 31, the terminal information transmitter 32 transmits the content holding terminal information to the managing device 2.

Therefore, the terminal information transmitter 32 has a function of monitoring the content holding unit 31.

That is, when the terminal device 3a obtains content from another terminal device and newly holds the obtained content into the content holding unit 31, the terminal information transmitter 32 transmits the content holding terminal information to the managing device 2.

The responding unit 33 executes the following processing when receiving inquiry information from the managing device 2.

That is, the responding unit 33 first determine s whether the content is held in the content holding unit 31.

When determining that the content is held in the content holding unit 31, the responding unit 33 transmits to the managing device 2 the answer information indicating that the content is held in the content holding unit 31.

On the other hand, when determining that the content is not held in the content holding unit 31, the responding uni t 33 transmits to the managing device 2 the answer information indicating that the content is not held in the content holding unit 31.

The instruction receiver 34 receives the extinction preventing instruction transmitted from the managing device 2 through the network N.

The instruction receiving unit 34 outputs the received extinction preventing instruction to the copying unit 35.

The copying unit 35 copies the content held in the content holding unit 31 into a memory (not illustrated) in the terminal device 3a according to the extinction preventing instruction received from the instruction receiver 34.

Accordingly, two copies of the same item of content are held in the terminal device 3a.

Therefore, even when the content held in the content holding unit 31 is deleted by the user of the terminal device 3a, the copied content is still held in the terminal device 3a.

In the foregoing description, the copying unit 35 copies the content held in the content holding unit 31 into the memory in the terminal device 3a. However, the present invention is not limited to this style.

For example, the copying unit 35 may copy the content held in the content holding unit 31 into a memory in another terminal device.

In this case, the copying unit 35 inquires to another terminal device about whether the content may be copied.

When an answer indicating that the content may be copied is obtained from the other terminal device, the copying unit 35 copies the content held in the content holding unit 31 into the memory in the other terminal device.

Accordingly, even when the memory of the self terminal device has no capacity to copy the content, the copying unit 35 can copy the content held in the content holding unit 31.

In the foregoing description, the processing of copying the content is adopted for preventing the extinction (loss from the system) of content. However, the present invention is not limited to this style.

For example, a technique of displaying on a display screen of the terminal device that the content is scarce may be adopted as a way of preventing the extinction of the content.

Accordingly, the user of the terminal device can know that the content held in the self terminal device is a scarce content, in other words is held in only one or a small number of copies within the system.

Furthermore, so that the content held in the content holding unit 31 is not deleted, the processing of prohibiting the deletion of the content concerned may be adopted.

That is, any processing may be adopted insofar as it is the processing of preventing the extinction of the content .

The managing device 2 and the terminal device 3 are illustrated in Fig. 1 so as to be discriminated from each other. However, actually, one or plural terminal devices of terminal devices connected to the network N may function as the managing device 2.

For example, by using conventional DHT (Distributed Hash Table) method, one or plural terminal devices that can serve as the managing device 2 for managing contents are selected from the terminal devices connected to the network N.

That is, one terminal device may serve as one content managing device as in the case of this embodiment, or one terminal device may serve as plural content managing devices.

Furthermore, the present invention can be implemented by an embodiment (information processing system) in which the function of the managing device 2 described in this embodiment is dispersively arranged in (distributed across) plural terminal devices on the P2P system.

The same is applied to embodiments described below.

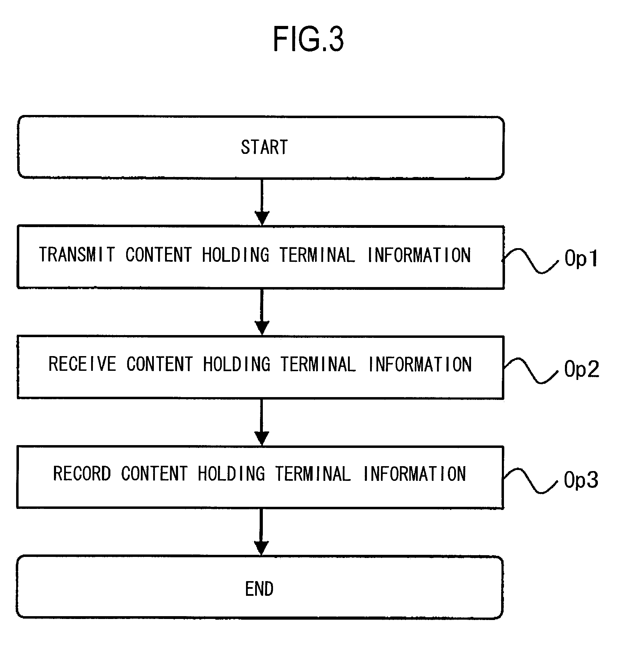

Next, the operation of the thus-constructed P2P system 1 will be described with reference to Figs. 3 to 5.

Fig. 3 is a flowchart illustrating an example of the operation of the P2P system 1 when the terminal device 3 transmits the content holding terminal information to the managing device 2.

As illustrated in Fig. 3, the terminal information transmitter 32 of the terminal device 3 transmits the content holding terminal information to the managing device 2 when content is newly held in the content holding unit 31 (Op1).

The terminal information receiver 21 of the managing device 2 receives the content holding terminal information transmitted in Op1 through the network N (Op2).

The terminal information receiver 21 records the content holding terminal information received in Op2 to the terminal information recording unit 22 (Op3).

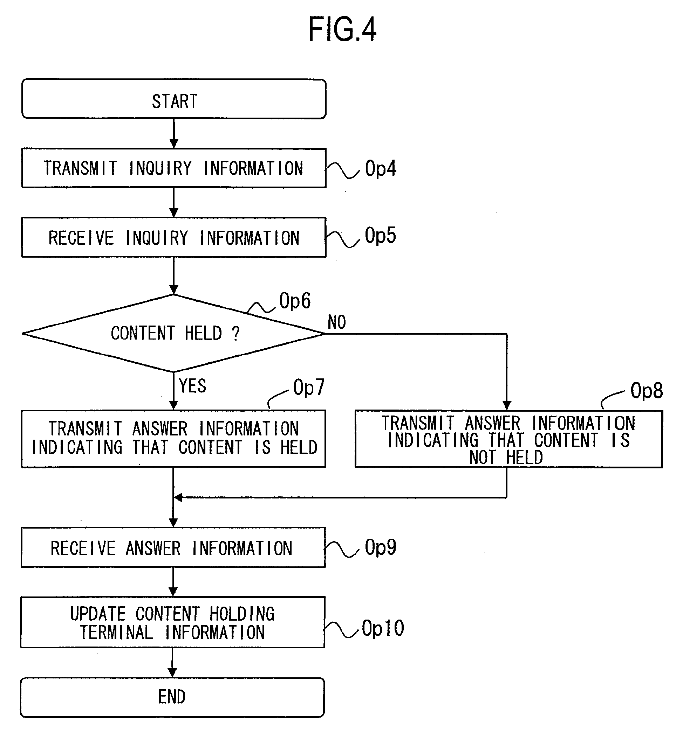

Fig. 4 is a flowchart illustrating an example of the operation of the P2P system 1 when the managing device 2 transmits inquiry information to the terminal device 3.

As illustrated in Fig. 4, the inquiring unit 23 of the managing device 2 transmits the inquiry information for inquiring about holding or non-holding of the content to the terminal device corresponding to a terminal ID contained in the content holding terminal information recorded in the terminal information recording unit 22 (Op4).

The timing at which the inquiring unit 23 transmits the inquiry information to the terminal device 3 is not limited to a specific one.

The responding unit 33 of the terminal device 3 receives the inquiry information transmitted in Op4 through the network N (Op5).

The responding unit 33 determines whether the content is held in the content holding unit 31 or not (Op6).

When it is determined that the content is held in the content holding unit 31 (YES in Op6), the responding unit 33 transmits to the managing device 2 the answer information indicating that the content is held in the content holding unit 31 (Op7).

On the other hand, when it is determined that the content is not held in the content holding unit 31 (NO in Op6), the responding unit 33 transmits to the managing device 2 the answer information indicating that the content is not held in the content holding unit 31 (Op8).

The inquiring unit 23 receives the answer information transmitted in Op7 or Op8 through the network N (Op9).

The terminal information updating unit 24 updates the content holding terminal information recorded in the terminal information recording unit 22 on the basis of the answer information received in Op9 (Op10).

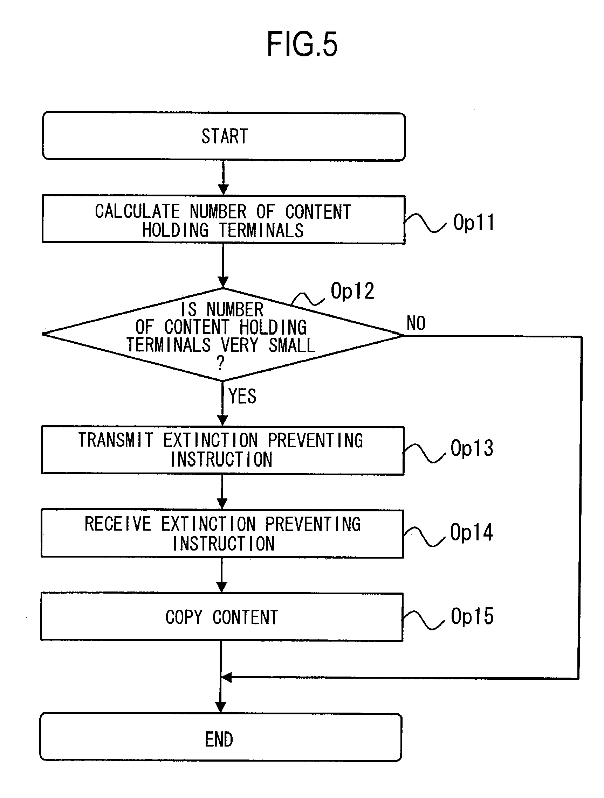

Fig. 5 is a flowchart illustrating an example of the operation of the P2P system 1 when it is determined whether the content holding terminal number is very small or not.

As illustrated in Fig. 5, the terminal number calculator 25 of the managing device 2 calculates the content holding terminal number on the basis of the content holding terminal information recorded in the terminal information recording unit 22 (Op11).

The scarcity determining unit 27 determines on the basis of the content holding terminal number calculated in Op11 and the determination reference recorded in the determination reference holding unit 26 whether the content holding terminal number is very small or not (Op12).

The scarcity determining unit 27 goes to Op13 when it determines that the content holding terminal number is very small (YES in Op12).

On the other hand, the scarcity determining unit 27 finishes the processing of Fig. 5 when it determines that the content holding terminal number is not very small (NO in Op12).

In Op13, the instruction transmitter 28 transmits an extinction preventing instruction to the terminal devices corresponding to terminal IDs contained in the content holding terminal information recorded in the terminal information recording unit 22 (Op13).

Here, the extinction preventing instruction is an instruction for executing some form of processing for preventing extinction of content.

In this embodiment, the above processing is assumed as the processing of copying the content as described above .

The instruction receiver 34 of the terminal device 3 receives the extinction preventing instruction transmitted in Op13 through the network N (Op14).

The copying unit 35 copies the content held in the content holding unit 31 into the memory of the terminal device 3 according to the extinction preventing instruction received in Op14 (Op15).

As described above, according to the P2P system 1 of this embodiment, on the basis of the content holding terminal number calculated by the terminal number calculator 25 and the determination reference recorded in the determination reference holding unit 26, the scarcity determining unit 27 of the managing device 2 determines whether the content holding terminal number concerned is very small (for example, below a predetermined threshold value).

When it is determined by the scarcity determining unit 27 that the content holding terminal number is very small, the instruction transmitting unit 28 transmits the extinction preventing instruction for executing the processing of preventing the extinction of the content concerned to the terminal device(s) holding the content.

Accordingly, the terminal device(s) holding the content can execute the processing of preventing the extinction of the content concerned according to the transmitted extinction preventing instruction.

That is, in this embodiment, the copying unit 35 of the terminal device 3 copies the content held in the content holding unit 31 into the memory of the terminal device 3.
As a result, the distribution of the content can be maintained on the P2P system 1.

[Embodiment 2]

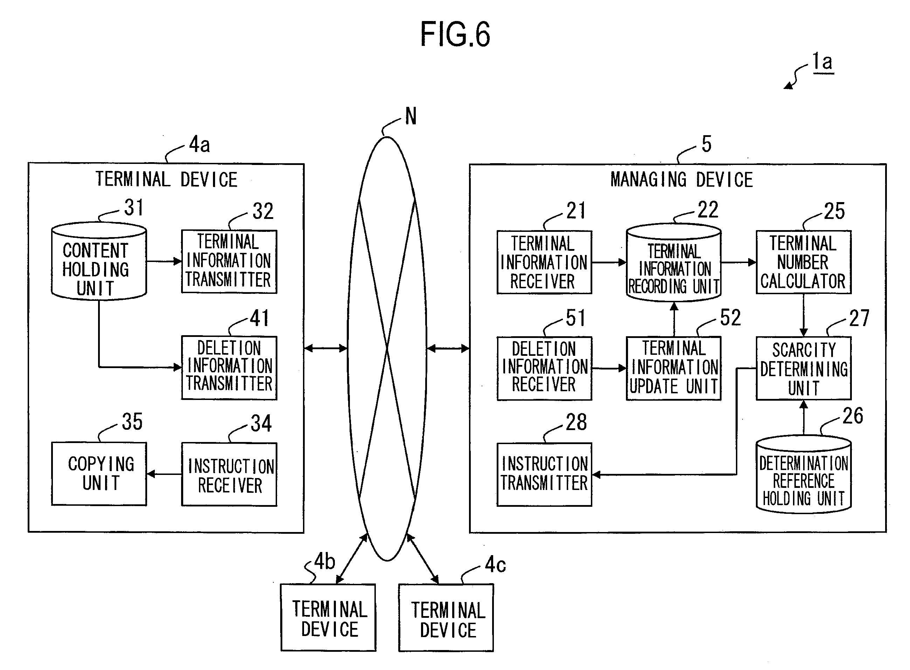

Fig. 6 is a block diagram illustrating the construction of a P2P system 1a according to this embodiment.

That is, in the P2P system 1a according to this embodiment, the functions of terminal devices 4a to 4c are different from those of the terminal devices 3a to 3c illustrated in Fig. 1.

Furthermore, in the P2P system 1a according to this embodiment, the function of a managing device 5 is also different from that of the managing device 2 illustrated in Fig. 1.

In Fig. 6, the constituent elements having the same functions as illustrated in Fig. 1 are represented by the same reference numerals, and the detailed description thereof is omitted.

The terminal device 4a has a deletion information transmitter 41 in place of the responding unit 33 illustrated in Fig. 1.

The constructions of the terminal devices 4a and 4 c are the same as the terminal device 4a.

When content held in the content holding unit 31 is deleted, the deletion information transmitter 41 transmits deletion information indicating deletion of the content concerned to the managing device 5 through the network N.

Therefore, the deletion information transmitter 41 has a function of monitoring the content holding unit 31.

The managing device 5 has a deletion information receiver 51 in place of the inquiring unit 23 illustrated in Fig. 1. Furthermore, the managing device 5 has a terminal information updating unit 52 in place of the terminal information updating unit 24 illustrated in Fig. 1.

The deletion information receiver 51 receives the deletion information transmitted from the terminal device 4 through the network N. The terminal information receiver 51 outputs the received deletion information to the terminal information updating unit 52.

The terminal information updating unit 52 updates the content holding terminal information recorded in the terminal information recording unit 22 so as to delete the content holding terminal information corresponding to the terminal device transmitting the deletion information.

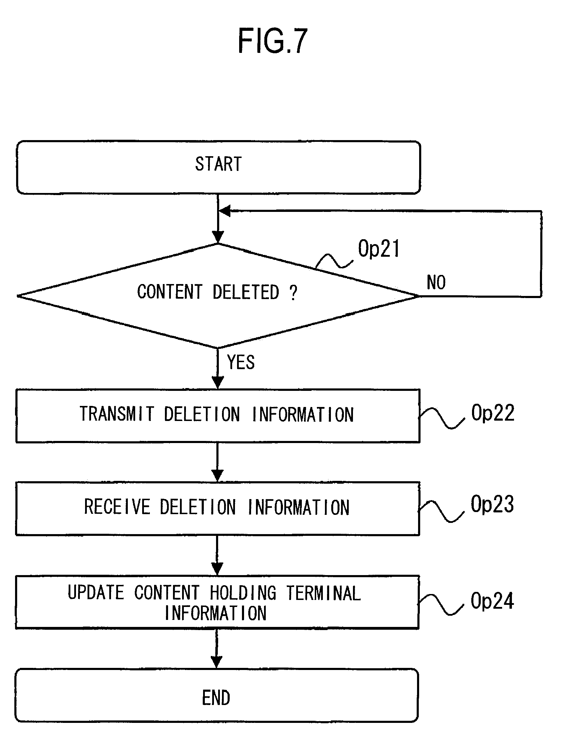

Next, the operation of the P2P system 1a according to the above construction will be described with reference to Fig. 7.

Fig. 7 is a flowchart illustrating an example of the operation of the P2P system 1a when the terminal device 4 transmits the deletion information to the managing device 5.

As illustrated in fig. 7, the deletion information transmitter 41 of the terminal device 4 determines whether the content held in the content holding unit 31 is deleted from the content holding unit 31 or not (Op21).

When it is determined that the content held in the content holding unit 31 is deleted from the content holding unit(YES in Op21), the deletion information transmitter 41 transmits the deletion information indicating the deletion of the content concerned to the managing device 2 through the network N (Op22).

On the other hand, when it is determined that th e content held in the content holding unit 31 is not deleted (NO in Op21), the deletion information transmitter 41 returns to Op21, and repeats the determination processing of Op21.

The deletion information receiver 51 of the managing device 5 receives the deletion information transmitted in Op22 through the network N (Op23).

The terminal information updating unit 52 updates the content holding terminal information recorded in the terminal information recording unit 22 so as to delete the content holding terminal information corresponding to the terminal device that transmits the deletion information received in Op23 (Op24).

As described above, according to the P2P system 1a of this embodiment, the content holding terminal information recorded in the terminal information recording unit 22 can be updated to the latest state.

Furthermore, the traffic of the P2P system 1a (the traffic of the network N) can be more greatly suppressed as compared with the style in which it is inquired from the managing device 5 to the terminal device 4 whether the content is held or not.

[Embodiment 3]

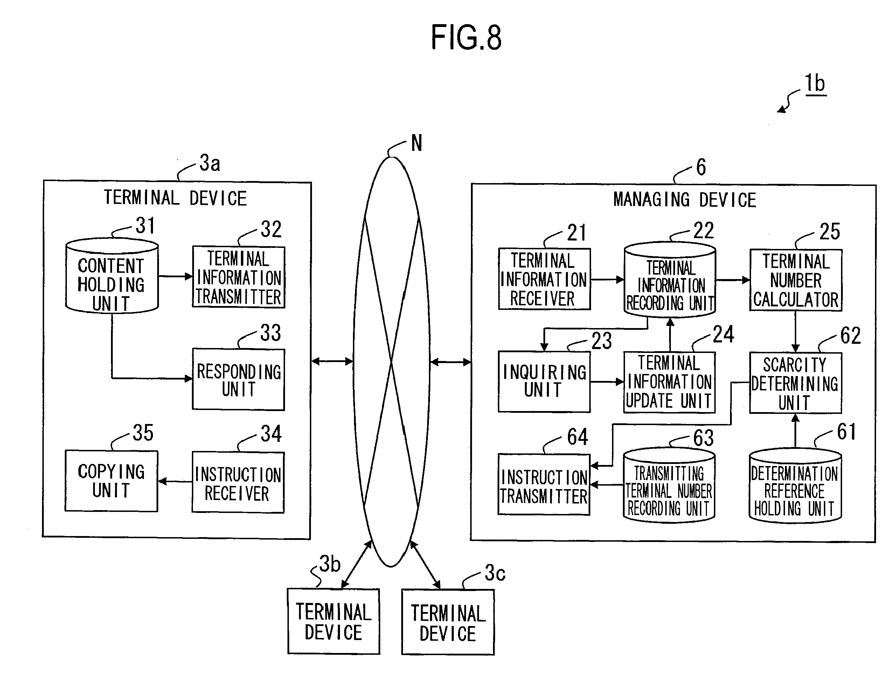

Fig. 8 is a block diagram illustrating the schematic construction of a P2P system 1b according to this embodiment.

That is, in the P2P system 1b according to this embodiment, the function of the managing device 6 is different from that of the managing device 2 illustrated in Fig. 1.

In Fig. 8, the constituent elements having the same functions as illustrated in Fig. 1 are represented by the same reference numerals, and the detailed description thereof is omitted.

The managing device 6 is equipped with a determination reference holding unit 61, a scarcity determining unit 62 and an instruction transmitter 64 in place of the determination reference holding unit 26, the scarcity determining unit 27 and the instruction transmitter 28 illustrated in Fig. 1.

Furthermore, in addition to the constituent elements equipped to the managing device 2 illustrated in Fig. 1, the managing device 6 is equipped with a transmission terminal number recording unit 63.

Unlike the determination reference holding unit 2 6 illustrated in Fig. 1, the determination reference holding unit 61 records plural determination references provided at plural stages.

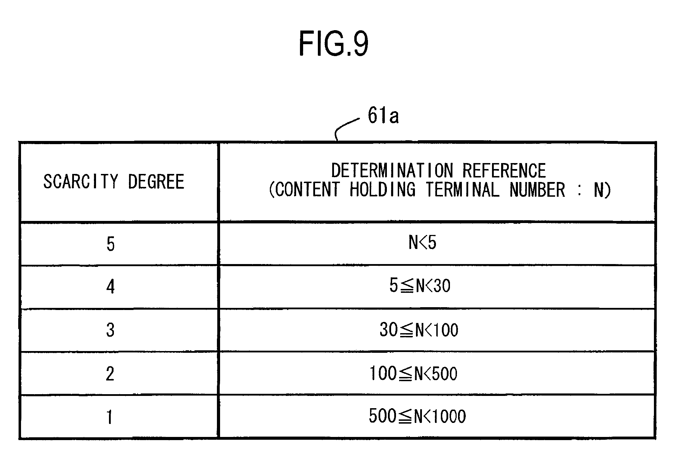

Fig. 9 is a diagram illustrating an example of the determination references recorded in the determination reference holding unit 61 according to this embodiment.

That is, the determination reference holding unit 61 according to this embodiment records the determination references as a table 61a.

As illustrated in Fig. 9, the scarcity degrees and the determination references are recorded in the table 61a. Here, the scarcity degree represents how small the content holding terminal number is (i.e., the degree of scarcity). In this embodiment, when the content holding terminal number N is less than 5, the scarcity degree is highest and equal to "5". Furthermore, when the content holding terminal number N is not less than 500 and is less than 1000, the scarcity degree is lowest and equal to "1".

The scarcity determining unit 62 determines the scarcity degree of the content holding terminal number on the basis of the content holding terminal number calculated by the terminal number calculator 25 and the plural determination references recorded in the determination reference holding unit 61.

For example, in this embodiment, when the content holding terminal number calculated by the terminal number calculator 25 is equal to 25, the scarcity determining unit 62 refers to the table 61a to determine the scarcity degree "4".

The transmission terminal number recording unit 63 records transmission terminal number information representing the number of terminal devices to which the instruction transmitter 64 should transmit the extinction preventing instruction.

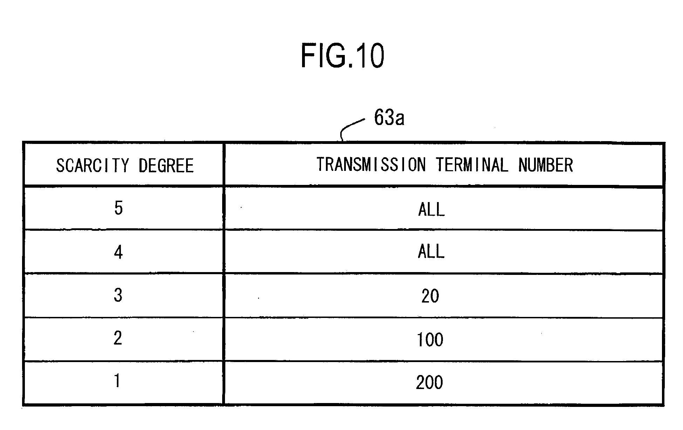

Fig. 10 is a diagram illustrating an example of the transmission terminal number information recorded in the transmission terminal number recording unit 63 according to this embodiment.

That is, the transmission terminal number recording unit 63 according to this embodiment records the transmission terminal number information as a table 63a.

As illustrated in Fig. 10, the scarcity degree and the transmission terminal number are recorded in the table 63a.

That is, the transmission terminal number "ALL" of the table 63a illustrated in Fig.10 represents that the extinction preventing instruction is transmitted to the terminal devices corresponding to the terminal IDs contained in all the content holding terminal information pieces recorded in the terminal information recording unit 22 when the scarcity degree is equal to "5" or "4".

Furthermore, the transmission terminal number "20" of the table 63a illustrated in Fig.10 represents that the extinction preventing instruction is transmitted to the terminal devices corresponding to the terminal IDs contained in twenty pieces of the content holding terminal information that are recorded in the terminal information recording unit 22 and randomly selected when the scarcity degree is equal to "3".

Still furthermore, the transmission terminal number "100" of the table 63a illustrated in Fig.10 represents that the extinction preventing instruction is transmitted to the terminal devices corresponding to the terminal IDs contained in 100 piece s of the content holding terminal information that are recorded in the terminal information recording unit 22 and randomly selected when the scarcity degree is equal to "2".

Still furthermore, the transmission terminal number "200" of the table 63a illustrated in Fig.10 represents that the extinction preventing instruction is transmitted to the terminal devices corresponding to the terminal IDs contained in 200 pieces of the content holding terminal information that are recorded in the terminal information recording unit 22 and randomly selected when the scarcity degree is equal to "1".

The instruction transmitter 64 first reads out from the transmission terminal number recording unit 63 the transmission terminal number corresponding to the scarcity degree determined by the scarcity determining unit 62.

The instruction transmitter 64 randomly extracts content holding terminal information pieces by the number corresponding to the read-out transmission terminal number from the content holding terminal information pieces recorded in the terminal information recording unit 22.

The instruction transmitter 64 transmits the extinction preventing instruction to the terminal devices corresponding to the terminal IDs contained in the extracted content holding terminal information pieces.

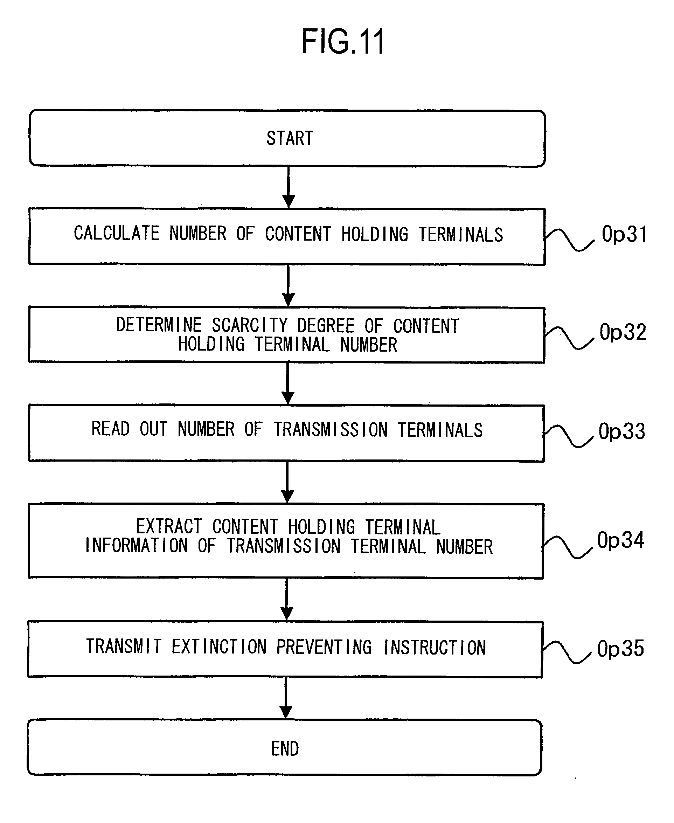

Next, the operation of the P2P system 1b according to the above construction will be described with reference to Fig. 11.

Fig. 11 is a flowchart illustrating an example of the operation of the P2P system 1b when the scarcity degree of the content holding terminal number is determined.

As illustrated in Fig. 11, the terminal number calculator 25 of the managing device 6 calculates the content holding terminal number on the basis of the content holding terminal information recorded in the terminal information recording unit 22 (Op31).

The scarcity determining unit 62 determines the scarcity degree of the content holding terminal number on the basis of the content holding terminal number calculated in Op31 and the plural determination references recorded in the determination reference holding unit 61 (Op32).

The instruction transmitter 64 reads out the transmission terminal number corresponding to the scarcity degree determined in Op32 from the transmission terminal number recording unit 63 (Op33).

The instruction transmitter 64 randomly extracts content holding terminal information pieces by the number corresponding to the transmission terminal number read out in Op33 out of the content holding terminal information pieces recorded in the terminal information recording unit 22 (Op34).

The instruction transmitter 64 transmits the extinction preventing instruction to the terminal devices corresponding to the terminal IDs contained in the content holding terminal information pieces extracted in Op34 (Op35).

As described above, according to the P2P system 1b of this embodiment, the instruction transmitter 64 can transmit the extinction preventing instruction to the terminal devices corresponding to the scarcity degree out of the terminal devices holding the content.

The processing of the preventing the extinction of certain piece of content to be executed in the terminal device 3 may be changed in accordance with the scarcity degree determined by the scarcity determining unit 62.

For example, when the scarcity degree is equal to "1" or "2", the terminal device 3 makes the terminal device display on the display screen thereof that the content is scarce.

Furthermore, for example when the scarcity degree is equal to "3" or "4", the terminal device 3 copies the content held in the content holding unit 31 into its own memory.

Furthermore, for example when the scarcity degree is equal to "5", the terminal device 3 executes the processing of prohibiting deletion of contents held in the content holding unit 31 so that the contents concerned are not deleted.

As described above, when the scarcity degree is low, it is merely allowed to be displayed on the display screen of the terminal device that the content is scarce. When the scarcity degree is high, the processing of prohibiting the deletion of content held in the content holding unit 31 is executed so that the content concerned cannot be deleted.

Accordingly, the terminal device 3 can execute the most appropriate processing for preventing the extinction of the content.

[Embodiment 4]

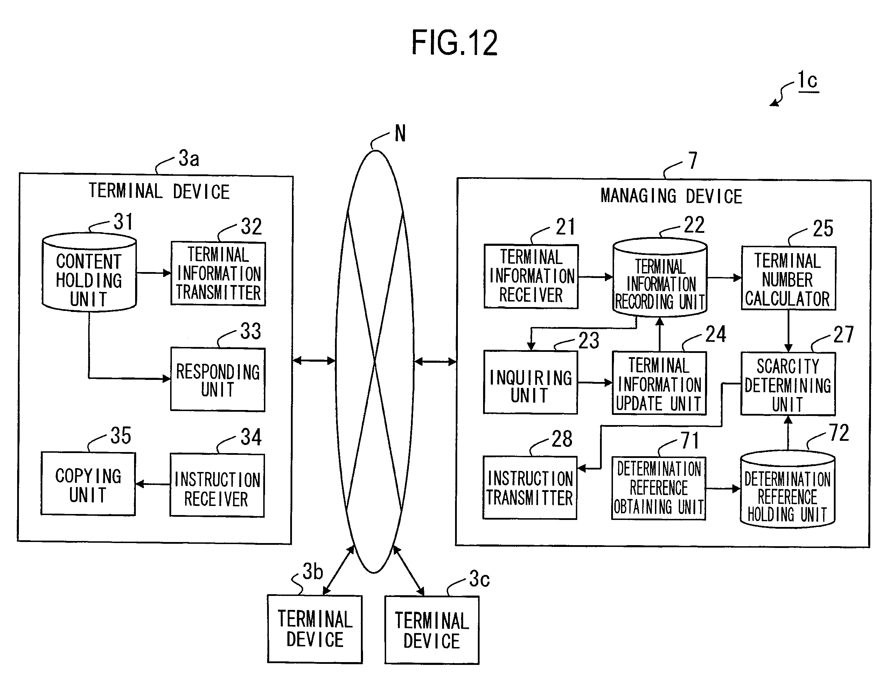

Fig. 12 is a block diagram illustrating the schematic construction of a P2P system 1c according to this embodiment.

That is, in the P2P system 1c according to this embodiment, the function of the managing device 7 is different from that of the managing device 2 illustrated in Fig. 1.

In Fig. 12, the constituent elements having the same functions as illustrated in Fig. 1 are represented by the same reference numerals, and the detailed description thereof is omitted.

The managing device 7 is equipped with a determination reference obtaining unit 71 in addition to the constituent elements provided to the managing device 2 illustrated in Fig. 1.

Furthermore, the managing device 7 is equipped with a determination reference holding unit 72 in place of the determination reference holding unit 26 illustrated in Fig. 1.

The determination reference obtaining unit 71 obtains the determination reference from the outside of the managing device 7.

For example, when an input device is connected to the outside of the managing device 7, a determination reference that is input with an input device by the user of the managing device 7 is obtained from the input device concerned by the determination reference obtaining unit 71.

Furthermore, for example, the determination reference obtaining unit 71 obtains the determination reference transmitted from the terminal device 3 through the network N.

The determination reference obtaining unit 71 records the obtained determination reference into the determination reference holding unit 72. Accordingly, the determination reference which the user desires can be recorded into the determination reference holding unit 72.

That is, according to the P2P system 1 of this embodiment, for example, determination references that are different every content or every scarcity degree even in the case of the same content can be recorded in the determination reference holding unit 72.

Furthermore, the present invention is not limited to this style, and determination references which are different for every genre (type) of content or every business enterprise providing content can be recorded in the determination reference holding unit 72.

The embodiments can be implemented in computing hardware (computing apparatus) and/or software, such as (in a non-limiting example) any computer that can store, retrieve, process and/or output data and/or communicate with other computers. The results produced can be displayed on a display of the computing hardware. A program/software implementing the embodiments may be recorded on computer-readable media comprising computer-readable recording media. The program/software implementing the embodiments may also be transmitted over transmission communication media. Examples of the computer-readable recording media include a magnetic recording apparatus, an optical disk, a magneto-optical disk, and/or a semiconductor memory (for example, RAM, ROM, etc.). Examples of the magnetic recording apparatus include a hard dis k device (HDD), a flexible disk (FD), and a magnetic tape (MT) . Examples of the optical disk include a DVD (Digital Versatile Disc), a DVD-RAM, a CD-ROM (Compact Disc - Read Only Memory), and a CD-R (Recordable)/RW. An example of communication media includes a carrier-wave signal.

Further, according to an aspect of the embodiments, any combinations of the described features, functions and/or operations can be provided.

The many features and advantages of the embodiments are apparent from the detailed specification and, thus, it is intended by the appended claims to cover all such features and advantages of the embodiments that fall within the scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope of the claims.

## Claims

1. An information processor that is connectable to a communication system containing a plurality of terminal devices, the processor comprising:
a terminal information receiver that receives content holding terminal information for identifying a terminal device holding a content out of the plural terminal devices;
a terminal number calculator that calculates a content holding terminal number corresponding to the number of terminal devices holding the content on the basis of the received content holding terminal information;
a determination reference holding unit that holds a determination reference serving as a reference for determining whether the content holding terminal number is below a predetermined threshold value;
a scarcity determining unit that determines on the basis of the content holding terminal number calculated by the terminal number calculator and the determination reference held by the determination reference holding unit whether the content holding terminal number concerned is below the predetermined threshold value; and
an instruction transmitter which transmits an extinction preventing instruction for making the terminal device holding the content concerned execute processing of preventing extinction of the content concerned when the scarcity determining unit determines that the content holding terminal number is below the predetermined threshold value.

2. The information processor according to claim 1, further comprising:
an inquiring unit that transmits inquiry information for inquiring whether the content is held or not to a terminal device corresponding to content holding terminal information received by a terminal information receiver, and receives answer information obtained as a response to the inquiry concerned from the terminal device concerned; and
a terminal information updating unit that updates the content holding terminal information received by the terminal information receiver so that the content holding terminal information corresponding to the terminal device transmitting the answer information is deleted when the answer information received by the inquiring unit indicates that the content is not held.

3. The information processor according to claim 1 or 2, further comprising:
a deletion information receiver that receives deletion information representing deletion of the content from a terminal device corresponding to content holding terminal information received by the terminal information receiver; and
a terminal information updating unit that updates the content holding terminal information received by the terminal information receiver so as to delete the content holding terminal information corresponding to the terminal device that transmits the deletion information concerned.

4. The information processor according to claim 1, 2, or 3, wherein the determination reference holding unit holds plural determination references provided at plural stages,
wherein the scarcity determining unit determines a scarcity degree indicating how small the number of terminal devices that hold the content is on the basis of the number of terminal devices holding the content that is calculated by the terminal number calculator and the plural determination references held in the determination reference holding unit, and
wherein the instruction transmitter transmits an extinction preventing instruction to terminal devices corresponding to the scarcity degree determined by the scarcity determining unit out of the terminal devices holding the content.

5. The information processor according to any preceding claim, further comprising:
a determination reference obtaining unit that obtains a determination reference from the outside of the information processor, and transmits the obtained determination reference to the determination reference holding unit.

6. An information processing system that is communicatable with terminal devices holding a content, the system comprising:
a terminal information obtaining unit that obtains content holding terminal information for identifying a terminal device holding the content;
a terminal number calculator that calculates a content holding terminal number corresponding to the number of terminal devices holding the content on the basis of the obtained content holding terminal information;
a determination reference holding unit that holds a determination reference serving as a reference for determining whether the content holding terminal number is below a predetermined threshold value;
a scarcity determining unit that determines on the basis of the content holding terminal number calculated by the terminal number calculator and the determination reference held by the determination reference holding unit whether the content holding terminal number concerned is below the predetermined threshold value; and
an instruction transmitter that transmits an extinction preventing instruction for making the terminal device holding the content concerned execute processing of preventing extinction of the content concerned when the scarcity determining unit determines that the content holding terminal number is below the predetermined threshold value.

7. A method of executing processing by an information processor that is connectable to a communication system containing a plurality of terminal devices, the method comprising:
obtaining content holding terminal information for identifying a terminal device holding a content out of the plural terminal devices;
calculating a content holding terminal number on the basis of the obtained content holding terminal information by the information processor;
determining, on the basis of the content holding terminal number calculated by the terminal number calculating step and a given determination reference, whether the content holding terminal number concerned is below a predetermined threshold value, by the information processor; and
transmitting an extinction preventing instruction for preventing extinction of the content concerned to the terminal device holding the content by the information processor when determining that the content holding terminal number is below a predetermined threshold value.

8. A program that allows a computer connectable to a communication system containing a plurality of terminal devices to execute processing, the computer enabling access to a terminal information receiver that receives content holding terminal information for identifying a terminal device holding a content out of the plural terminal devices, and a determination reference holding unit that holds a determination reference serving as a reference for determining whether the content holding terminal number corresponding to the number of terminal devices holding the content is below a predetermined threshold value,
the program allowing the computer to execute:
calculating a content holding terminal number on the basis of the content holding terminal information received by the terminal information receiver;
determining, on the basis of the calculated content holding terminal number and the determination reference held by the determination reference holding unit, whether the content holding terminal number is below the predetermined threshold value; and
transmitting an extinction preventing instruction for making the terminal device holding the content execute processing of preventing extinction of the content to the terminal device holding the content when the content holding terminal number is below the predetermined threshold value.

9. A computer-readable medium on which is recorded the program according to claim 8.
